(19) Europäisches Patentamt
European Patent Office
Office européen des brevets

(11) EP 2 931 513 B1

(12) **EUROPEAN PATENT SPECIFICATION**

(45) Date of publication and mention of the grant of the patent:
**23.05.2018 Bulletin 2018/21**

(21) Application number: **13798295.5**

(22) Date of filing: **25.11.2013**

(51) Int Cl.:
***B32B 1/08*** *(2006.01)* ***B32B 27/32*** *(2006.01)*
***C08F 210/06*** *(2006.01)* ***C08J 5/18*** *(2006.01)*
***F16L 9/12*** *(2006.01)* ***C08F 10/00*** *(2006.01)*
***B32B 27/08*** *(2006.01)* ***C08F 10/14*** *(2006.01)*

(86) International application number:
**PCT/EP2013/074555**

(87) International publication number:
**WO 2014/090552 (19.06.2014 Gazette 2014/25)**

(54) **PROPYLENE-BASED TERPOLYMERS**

PROPYLENBASEIRTE TERPOLYMERE

TERPOLYMÈRES À BASE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2012 EP 12196624**
**12.12.2012 US 201261736364 P**

(43) Date of publication of application:
**21.10.2015 Bulletin 2015/43**

(73) Proprietor: **Basell Poliolefine Italia S.r.l.**
**20121 Milano (IT)**

(72) Inventors:
- **GALVAN, Monica**
**I-44122 Ferrara (IT)**
- **NEUMANN, Andreas**
**I-44122 Ferrara (IT)**
- **FUSCO, Ofelia**
**I-44122 Ferrara (IT)**
- **GADDI, Benedetta**
**I-44122 Ferrara (IT)**
- **COLLINA, Gianni**
**I-44122 Ferrara (IT)**
- **CAPUTO, Tiziana**
**I-44122 Ferrara (IT)**
- **SQUARZONI, Stefano**
**I-44122 Ferrara (IT)**
- **MAZZUCCO, Antonio**
**I-44122 Ferrara (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**EP-A1- 0 728 769** **EP-A1- 2 186 834**
**WO-A1-00/63261** **WO-A1-2012/031951**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 931 513 B1

## Description

The present invention relates to a propylene/ethylene/1-hexene terpolymer particularly fit for the production of pipes.

Propylene/ethylene/1-hexene terpolymers are already known in the art for the production of pipes. For example WO2006/002778 relates to a pipe system comprising a terpolymer of propylene/ethylene and alpha olefin wherein the ethylene content is from 0 to 9% by mol, preferably from 1 to 7% by mol and the 1-hexene content ranges from 0.2 to 5% wt. When small diameter pipes are needed it is important to have limited wall thickness of the pipe. This allows to obtain pipes containing less material and above all to improve the efficiency of the pipe in terms of feed due to the higher internal diameter. However when the wall thickness become small the pipe could become brittle, thus it is necessary to use a material having high impact resistance, especially at low temperature.

The applicant found that it is possible to select from these ranges a composition having improved properties in particular improved impact properties to be used for small diameter pipes.

Thus an object of the present inventions is a terpolymer containing propylene, ethylene and 1-hexene obtainable by the step of copolymerizing propylene, ethylene and 1-hexene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

wherein in the terpolymer:

(i) the content of 1-hexene derived units ranges from 0.5 wt% to 5.0 wt% preferably from 1.0 wt% wt% to 3.2 wt %; more preferably from 1.5 wt% to 3.0 wt%; more preferably from 1.5 wt% to 2.8 wt%;
(ii) the content of ethylene derived units is higher than 1.4 wt% preferably higher than 1.5 wt% even more preferably higher than 1.6 wt% and fulfils the following relation (1):

$$C2<C6-0.2 \quad (1)$$

wherein C2 is the content of ethylene derived units wt% and C6 is the content of 1-hexene derived units wt%; preferably the relation (1) is C2<C6-0.3; more preferably C2<C6-0.5;
(iii) the melting temperature ranging from 130.0° C to 138.0° C; preferably from 133.0°C to 137.0°C.
(IV) the the melt flow rate (MFR) (ISO 1133 230°C, 5 kg) ranges from 0.1 to 3.9 g/10 min; preferably from 0.5 to 1.9 g/10 min;

The terpolymers of the present invention have a stereoregularity of isotactic type of the propylenic sequences, this is clear by the low value of xylene extractables that is lower than 10%wt: preferably lower than 8%wt; more preferably lower than 7%wt The crystallization temperature preferably ranges from 70°C to 100°C, preferably from 80°C to 97°C; more preferably from 85°C to 97°C.

The terpolymer of the present invention shows improved values of resistance to the impact and above all improved values of DBTT (ductile to brittle transition temperature). These properties render the terpolymer of the present inventing specially fit for obtaining pipes, in particular pressure pipes.

Thus a further object of the present invention is a pipe comprising the terpolymer of the present invention.

The term "pipe" as used herein also includes pipe fittings, valves and all parts which are commonly necessary for e.g. a hot water piping system. Also included within the definition are single and multilayer pipes, where for example one or more of the layers is a metal layer and which may include an adhesive layer.

Such articles can be manufactured through a variety of industrial processes well known in the art, such as for instance moulding, extrusion, and the like.

In a further embodiment of the invention, the terpolymer of the present invention further comprises an inorganic filler agent in an amount ranging from 0.5 to 60 parts by weight with respect to 100 parts by weight of the said heterophasic polypropylene composition. Typical examples of such filler agents are calcium carbonate, barium sulphate, titanium bioxide and talc. Talc and calcium carbonate are preferred. A number of filler agents can also have a nucleating effect, such as talc that is also a nucleating agent. The amount of a nucleating agent is typically from 0.2 to 5 wt% with respect to the polymer amount.

The terpolymer of the invention is also suitable for providing polypropylene pipes with walls of any configuration other than those with smooth inner and outer surface. Examples are pipes with a sandwich-like pipe wall, pipes with a hollow wall construction with longitudinally extending cavities, pipes with a hollow wall construction with spiral cavities, pipes with a smooth inner surface and a compact or hollow, spirally shaped, or an annularly ribbed outer surface, independently of the configuration of the respective pipe ends.

Articles, pressure pipes and related fittings according to the present invention are produced in a manner known per se, e.g. by (co-)extrusion or moulding, for instance.

Extrusion of articles can be made with different type of extruders for polyolefin, e.g. single or twin screw extruders.

A further embodiment of the present invention is a process wherein the said heterophasic polymer composition is moulded into said articles.

When the pipes are multi-layer, at least one layer is made of the terpolymer described above. The further layer(s) is/are preferably made of an amorphous or crystalline polymer (such as homopolymer and co- or terpolymer) of R-CH=$CH_2$ olefins, where R is a hydrogen atom or a $C_1$-$C_6$ alkyl radical. Particularly preferred are the following polymers:

1) isotactic or mainly isotactic propylene homopolymers;
2) random co- and terpolymers of propylene with ethylene and/or $C_4$-$C_8$ $\alpha$-olefin, such as 1-butene, 1-hexene, 1-octene, 4-methyl-1-pentene, wherein the total comonomer content ranges from 0.05% to 20% by weight, or mixture of said polymers with isotactic or mainly isotactic propylene homopolymers;
3) heterophasic polymer blends comprising (a) a propylene homopolymer and/or one of the co- and terpolymers of item (2), and an elastomeric moiety (b) comprising co- and terpolymers of ethylene with propylene and/or a $C_4$-$C_8$ $\alpha$-olefin, optionally containing minor amounts of a diene, the same disclosed for polymer (2)(a); and
4) amorphous polymers such as fluorinated polymers, polyvinyl difluoride (PVDF) for example.

In multi-layer pipes the layers of the pipe can have the same or different thickness.

In the solid catalyst component (a) the succinate is preferably selected from succinates of formula (I)

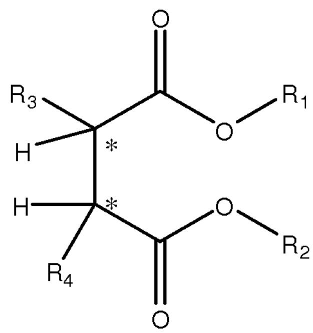

(I)

in which the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, $C_3$-$C_{20}$ cycloalkyl, $C_5$-$C_{20}$ aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the $R_3$ and/or $R_4$ radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II)

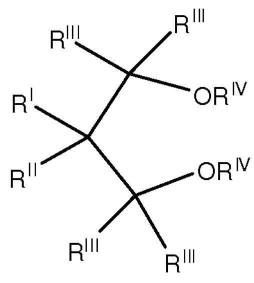

(II)

where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

Preferably, $R^{IV}$ is a 1-6 carbon atom alkyl radical and more particularly a methyl while the $R^{III}$ radicals are preferably hydrogen. Moreover, when $R^I$ is methyl, ethyl, propyl, or isopropyl, $R^{II}$ can be ethyl, propyl, isopropyl, butyl, isobutyl, tert-butyl, isopentyl, 2-ethylhexyl, cyclopentyl, cyclohexyl, methylcyclohexyl, phenyl or benzyl; when $R^I$ is hydrogen, $R^{II}$ can be ethyl, butyl, sec-butyl, tert-butyl, 2-ethylhexyl, cyclohexylethyl, diphenylmethyl, p-chlorophenyl, 1-naphthyl, 1-decahydronaphthyl; $R^I$ and $R^{II}$ can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III)

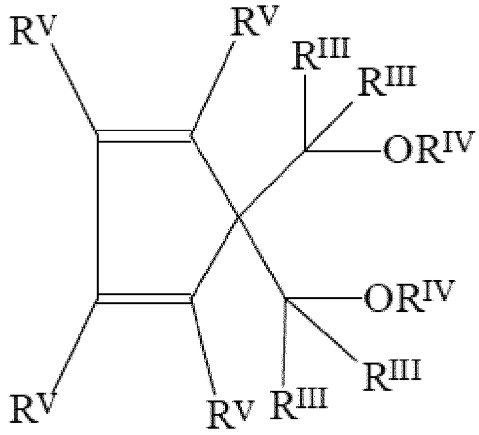

(III)

where the radicals $R^{IV}$ have the same meaning explained above and the radicals $R^{III}$ and $R^{V}$ radicals, equal or different to each other, are selected from the group consisting of hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals and two or more of the $R^V$ radicals can be bonded to each other to form condensed cyclic structures, saturated or unsaturated, optionally substituted with $R^{VI}$ radicals selected from the group consisting of halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals; said radicals $R^V$ and $R^{VI}$ optionally containing one or more heteroatoms as substitutes for carbon or hydrogen atoms, or both.

Preferably, in the 1,3-diethers of formulae (I) and (II) all the $R^{III}$ radicals are hydrogen, and all the $R^{IV}$ radicals are methyl. Moreover, are particularly preferred the 1,3-diethers of formula (II) in which two or more of the $R^V$ radicals are bonded to each other to form one or more condensed cyclic structures, preferably benzenic, optionally substituted by $R^{VI}$ radicals. Specially preferred are the compounds of formula (IV):

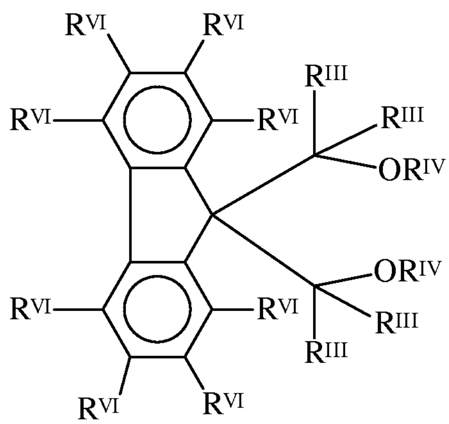

(IV)

where the $R^{VI}$ radicals equal or different are hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ aralkyl radicals, optionally containing one or more heteroatoms selected from the group consisting of N, 0, S, P, Si and halogens, in particular Cl and F, as substitutes for carbon or hydrogen atoms, or both; the radicals $R^{III}$ and $R^{IV}$ are as defined above for formula (II).

Specific examples of compounds comprised in formulae (II) and (III) are:

1,1 -bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;

1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3 -trifluoropropyl)indene;
1,1-bis(methoxymethyl)-7-trimethyisilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz [e]indene;
1,1-bis(methoxymethyl)-1H-2-methylbenz [e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3 -benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component (a) comprises, in addition to the above electron donors, a titanium compound having at least a Ti-halogen bond and a Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$ can be used, where n is the valence of titanium, y is a number between 1 and n-1 X is halogen and R is a hydrocarbon radical having from 1 to 10 carbon atoms.

Preferably, the catalyst component (a) has an average particle size ranging from 15 to 80 $\mu$m, more preferably from 20 to 70 $\mu$m and even more preferably from 25 to 65 $\mu$m. As explained the succinate is present in an amount ranging from 40 to 90% by mol with respect to the total amount of donors. Preferably it ranges from 50 to 85% by mol and more preferably from 65 to 80% by mol. The 1,3-diether preferably constitutes the remaining amount.

The alkyl-Al compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 5 to 500, preferably from 5 to 400 and more preferably from 10 to 200.

The catalyst forming components can be contacted with a liquid inert hydrocarbon solvent such as, e.g., propane, n-hexane or n-heptane, at a temperature below about 60°C and preferably from about 0 to 30°C for a time period of from about 6 seconds to 60 minutes. The above catalyst components (a), (b) and optionally (c) can be fed to a pre-contacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably said step (a) is carried out in the absence of inert hydrocarbon solvents.

The average residence time in this reactor generally ranges from 2 to 40 minutes, preferably from 10 to 25 minutes. The temperature ranges between 10°C and 50°C, preferably between 15°C and 35°C. Adopting these conditions allows to obtain a prepolymerization degree in the preferred range from 60 to 800g per gram of solid catalyst component, preferably from 150 to 500 g per gram of solid catalyst component. Step (a) is further characterized by a low concentration of solid in the slurry, typically in the range from 50 g to 300 g of solid per liter of slurry.

The said propylene-ethylene-hexene-1 polymers are produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it becomes possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture. The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

The following examples are given to illustrate the present invention without limiting purpose.

**Examples**

**Characterization methods**

- Melting temperature and crystallization temperature: Determined by differential scanning calorimetry (DSC). weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.
- Melt Flow Rate: Determined according to the method ISO 1133 (230° C, 5 kg).
- Solubility in xylene: Determined as follows.

2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

- 1-hexene and ethylene content: Determined by $^{13}$C-NMR spectroscopy in terpolymers: **NMR analysis.** $^{13}$C NMR spectra are acquired on an AV-600 spectrometer operating at 150.91 MHz in the Fourier transform mode at 120 °C. The peak of the propylene CH was used as internal reference at 28.83. The $^{13}$C NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program (1) | ZGPG |
| Pulse Length (P1) (2)\ | for 90° |
| Total number of points (TD) | 32K |
| Relaxation Delay (2) | 15 s |
| Number of transients (3) | 1500 |

The total amount of 1-hexene and ethylene as molar percent is calculated from diad using the following relations:

$$[P] = PP + 0.5PH + 0.5PE$$

$$[H] = HH + 0.5PH$$

$$[E] = EE + 0.5PE$$

Assignments of the $^{13}$C NMR spectrum of propylene/1-hexene/ethylene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |

(continued)

| Area | Chemical Shift | Assignments | Sequence |
|---|---|---|---|
| 4 | 38.00 - 37.40 | $S_{\alpha\gamma}$+ $S_{\alpha\delta}$ | PE |
| 5 | 35.70 -35.0 | $4B_4$ | H |
| 6 | 35.00 - 34.53 | $S_{\alpha\gamma}$+ $S_{\alpha\delta}$ | HE |
| 7 | 33.7533.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

Elongation at yield: measured according to ISO 527.
Elongation at break: measured according To ISO 527
Stress at break: measured according to ISO 527.
Impact test: ISO 9854
Samples for the mechanical analysis
Samples have been obtained according to ISO 294-2
Flexural Modulus
Determined according to ISO 178.
Tensile modulus
Determined according to ISO 527
DBTT (ductile to brittle transition temperature)
Measured via a biaxial impact test by means of an impact tester equipped with the following features:
- Load cell with natural frequency equal to or greater than 15,000 Hz
- Capability to impact with a nominal energy of 16J approx (5.3Kg mass * 30cm falling height)
- Hemispheric impactor 1/2" diameter
- Specimen support 38mm diameter
- Capability to integrate Force/Time curve

DBTT Test description:

Ten (10) 1.55*38mm injection molded specimens are impacted at several different temperatures in order to find the 3 temperatures at which a ratio of 20-80%, 40-60%, 80-20%, respectively, of Brittle/Ductile failures occurs.
As Brittle failure is intended a failure absorbing a total energy equal to or lower than 2 Joules. The best interpolation curve is then traced between those 3 temperatures. The temperature where the event of 50% Brittle and 50% Ductile failures occurs is intended to represent the DBTT.

**Example 1**

Preparation of the solid catalyst component

Into a 2000 mL five-necked glass reactor, equipped with mechanical stirrer, jacket and a thermocouple, purged with nitrogen, 1000 mL of $TiCl_4$ were introduced and the reactor cooled at -5°C. While stirring, 60.0 g of microspheroidal $MgCl_2 \cdot 1.7C_2H_5OH$ having average particle size of 58μm (prepared in accordance with the method described in example 1 of EP728769) was added at -5°C. The temperature was raised at 40°C and an amount of diethyl 2,3-diisopropylsuccinate such as to have a Mg/succinate molar ratio of 13 was added. The temperature was raised to 100°C and kept at this value for 60 min. After that the stirring was stopped for 15 min and the solid settled down. The liquid was siphoned off. After siphoning, fresh $TiCl_4$ and an amount of 9,9-bis(methoxymethyl)fluorene such to have a Mg/diether molar ratio of 26 was added. Then the temperature was raised to 110°C and kept for 30 minutes under stirring. The reactor was then cooled at 75°C and the stirrer was stopped for 15 min. After sedimentation and siphoning, fresh TiCl4 was added. Then the temperature was raised to 90°C and the suspension was stirred for 15min. The temperature was then decreased to 75°C and the stirrer was stopped, for 15 min. After sedimentation and siphoning at the solid was washed six times with anhydrous hexane (6 x 1000 ml) at 60 °C and one time with hexane at 25°C. The solid was dried in a rotavapor.

Preparation of the catalyst system

Before introducing it into the polymerization reactors, the solid catalyst component described above was contacted with aluminum-triethyl (TEAL) and dicyclopentyldimethoxysilane (DCPMS) at a temperature of 15°C.

Prepolymerization

The catalyst system was then subject to prepolymerization treatment at 20°C by maintaining it in suspension in liquid propylene for a residence time of 9 minutes before introducing it into the polymerization reactor.

Polymerization

Copolymers are prepared by polymerising propylene, ethylene and hexene-1 in the presence of a catalyst under continuous conditions in a plant comprising a polymerisation apparatus as described in EP 1 012 195. The catalyst is sent to the polymerisation apparatus that comprises two interconnected cylindrical reactors, riser and downcomer. Fast fluidisation conditions are established in the riser by recycling gas from the gas-solid separator. The polymer particles exiting the reactor are subjected to a steam treatment to remove the reactive monomers and volatile substances and then dried. The main operative conditions and characteristics of the produced polymers are indicated in Table 1.

**Comparative example 2**

Comparative example 2 has been carried out as example 1 with the difference that the solid catalyst component has been prepared by analogy with example 5 of EP-A-728 769 but using microspheroidal $MgCl_2 \cdot 1.7C_2H_5OH$ instead of $MgCl_2 \cdot 2.1C_2H_5OH$. Such catalyst component is used with dicyclopentyl dimethoxy silane (DCPMS) as external donor and with triethylaluminium (TEAL).

Table 1

| Examples | | 1 | COMP 2 |
|---|---|---|---|
| TEAL/solid catalyst component, g/g | | 7 | 4 |
| TEAL/DCPMS, g/g | | 5.5 | 4 |
| $C_6/(C_3+C_6)$, mol/mol | Riser | 0.029 | 0.03 |
| $C_6/(C_3+C_6)$, mol/mol | Downcomer | 0.027 | 0.038 |
| $C_2/(C_3+C_2)$, mol/mol | Riser | 0.007 | 0.023 |
| $C_2/(C_3+C_2)$, mol/mol | Downcomer | 0.026 | 0.0035 |
| C2 ethylene; C3 propylene; C6 1-hexene | | | |

Properties of the obtained material has been reported in table 2:

Table 2

| | | Ex 1 | **Comp ex 2** |
|---|---|---|---|
| MFR 5 Kg/230°C | g/10min | 1.0 | 1.03 |
| C6-NMR | % | 2.5 | 2.6 |
| C2-NMR | % | 1.6 | 1.7 |
| X.S. | % | 8.4 | 6.6 |
| ISO Characterization | | | |
| Flexural modulus 24h | MPa | 820 | 830 |
| Tensile modulus 24h | MPa | 740 | 750 |
| IZOD 0°C 24h | kJ/m2 | 12.6 | 8 |
| Stress at yield | % | 26 | 26 |
| Elongation at break | kJ/m2 | 350 | 360 |
| Tm | °C | 136.7 | 136 |
| Tc | °C | 95.4 | 93 |
| DB/TT | °C | 6.1 | >10 |

From table 2 results clearly that the terpolymer according of the present invention shows improved properties above all the DB/TT is considerably lower than comparative example 2.

## Claims

**1.** A terpolymer containing propylene, ethylene and 1-hexene obtainable by the step of copolymerizing propylene, ethylene and 1-hexene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

wherein in the terpolymer

(i) the content of 1-hexene derived units ranges from 0.5 to 5.0 wt%;
(ii) the content of ethylene derived units is higher than 1.4 t% and fulfils the following relation (1):

$$C2<C6-0.2 \qquad (1)$$

wherein C2 is the content of ethylene derived units wt% and C6 is the content of 1-hexene derived units wt%;
(iii) the melting temperature ranging from 130.0° C to 138.0° C;
(iv) the melt flow rate (MFR) (ISO 1133 230°C, 5 kg) ranges from 0.1 to 3.9 g/10 min.

**2.** The terpolymer according to claim 1 wherein the content of 1-hexene derived units ranges from 1.5 wt% to 3.2 and the content of ethylene derived units is higher than 1.5 wt%

**3.** The terpolymer according to any of claims 1-2 wherein relation (1) is C2<C6-0.3

4. The terpolymer according to any of claims 1-3 wherein the melt flow rate (MFR) (ISO 1133 230°C, 5 kg) ranges from 0.5 to 1.9 g/10 min;

5. The terpolymer according to any of claims 1-4 wherein the succinate is present in an amount ranging from ranges from 50 to 85% by mol the 1,3-diether constitutes the remaining amount.

6. Pipe systems and sheets comprising a polyolefin composition according to claims 1 to 5.

7. Mono- or multilayer pipes and sheets wherein at least one layer comprises the polyolefin composition according to claim 1

**Patentansprüche**

1. Terpolymer, das Propylen, Ethylen und 1-Hexen enthält, erhältlich durch den Schritt des Copolymerisierens von Propylen, Ethylen und 1-Hexen in Gegenwart eines Katalysatorsystems, umfassend das Produkt, welches durch Kontaktieren der folgenden Komponenten erhalten wird:

   (a) einer festen Katalysatorkomponente, umfassend ein Magnesiumhalogenid, eine Titanverbindung mit mindestens einer Ti-Halogen-Verbindung und mindestens zwei Elektronendonorverbindungen, von denen eine in einer Menge von 40 bis 90 Mol.% in Bezug auf die Gesamtmenge der Donoren vorhanden ist und ausgewählt ist aus Succinaten, und die andere ausgewählt ist aus 1,3-Diethern,
   (b) einer Aluminiumkohlenwasserstoffverbindung und
   (c) gegebenenfalls einer externen Elektronendonorverbindung,

   wobei in dem Terpolymer

   (i) der Gehalt an von 1-Hexen abgeleiteten Einheiten im Bereich von 0,5 bis 5,0 Gew.% liegt;
   (ii) der Gehalt an von Ethylen abgeleiteten Einheiten höher als 1,4 Gew.% ist und die folgende Beziehung (1) erfüllt:

$$C_2 < C_6 - 0{,}2 \qquad (1)$$

   wobei $C_2$ der Gehalt an von Ethylen abgeleiteten Einheiten in Gew.% ist, und $C_6$ der Gehalt an von 1-Hexen abgeleiteten Einheiten in Gew.% ist;
   (iii) die Schmelztemperatur im Bereich von 130,0 °C bis 138,0 °C liegt;
   iv) die Schmelzflussrate (MFR) (ISO 1133, 230 °C, 5 kg) im Bereich von 0,1 bis 3,9 g/10 min liegt.

2. Terpolymer nach Anspruch 1, wobei der Gehalt an von 1-Hexen abgeleiteten Einheiten im Bereich von 1,5 Gew.% bis 3,2 liegt und der Gehalt an von Ethylen abgeleiteten Einheiten höher als 1,5 Gew.% ist.

3. Terpolymer nach einem der Ansprüche 1 bis 2, wobei Beziehung (1) $C_2 < C_6 - 0{,}3$ ist.

4. Terpolymer nach einem der Ansprüche 1 bis 3, wobei die Schmelzflussrate (MFR) (ISO 1133, 230 °C, 5 kg) im Bereich von 0,5 bis 1,9 g/10 min liegt.

5. Terpolymer nach einem der Ansprüche 1 bis 4, wobei das Succinat in einer Menge im Bereich von 50 bis 85 Mol.% vorhanden ist, und der 1,3-Diether die restliche Menge ausmacht.

6. Rohrsystem und Lagen, die eine Polyolefinzusammensetzung nach den Ansprüchen 1 bis 5 umfassen.

7. Ein- oder mehrschichtige Rohre und Lagen, wobei mindestens eine Schicht die Polyolefinzusammensetzung nach Anspruch 1 umfasst.

**Revendications**

1. Terpolymère contenant du propylène, de l'éthylène et du 1-hexène, pouvant être obtenu par l'étape de copolymérisation de propylène, d'éthylène et de 1-hexène en présence d'un système de catalyseur comprenant le produit obtenu par mise en contact des composants suivants :

   (a) un composant catalyseur solide comprenant un halogénure de magnésium, un composé de titane ayant au moins une liaison Ti-halogène et au moins deux composés donneurs d'électrons dont l'un est présent en une quantité allant de 40 à 90 % en moles par rapport à la quantité totale de donneurs et est choisi parmi des succinates et l'autre étant choisi parmi des 1,3 diéthers,
   (b) un composé hydrocarbyle d'aluminium, et
   (c) éventuellement un composé donneur d'électrons externe,

   dans lequel, dans le terpolymère

   (i) la teneur en motifs dérivés de 1-hexène va de 0,5 à 5,0 % en poids ;
   (ii) la teneur en motifs dérivés d'éthylène est supérieure à 1,4 % en poids et satisfait à la relation (1) suivante :

   $$C2<C6-0,2 \qquad (1)$$

   dans lequel C2 est la teneur en motifs dérivés d'éthylène en % en poids et C6 est la teneur en motifs dérivés de 1-hexène en % en poids ;
   (iii) la température de fusion allant de 130,0 °C à 138,0 °C ;
   (iv) l'indice de fluidité à l'état fondu (MFR) (ISO 1133 230 °C, 5 kg) va de 0,1 à 3,9 g/10 min.

2. Terpolymère selon la revendication 1, dans lequel la teneur en motifs dérivés de 1-hexène va de 1,5 % en poids à 3,2 et la teneur en motifs dérivés d'éthylène est supérieure à 1,5 % en poids

3. Terpolymère selon l'une quelconque des revendications 1 à 2, dans lequel la relation (1) est C2<C6-0,3

4. Terpolymère selon l'une quelconque des revendications 1 à 3, dans lequel l'indice de fluidité à l'état fondu (MFR) (ISO 1133 230 °C, 5 kg) va de 0,5 à 1,9 g/10 min ;

5. Terpolymère selon l'une quelconque des revendications 1 à 4, dans lequel le succinate est présent en une quantité allant de 50 à 85 % en moles, le 1,3-diéther constituant la quantité restante.

6. Systèmes de tuyau et feuilles comprenant une composition de polyoléfine selon les revendications 1 à 5.

7. Tuyaux et feuilles mono- ou multicouches, dans lesquels au moins une couche comprend la composition de polyoléfine selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006002778 A
- US 4298718 A
- US 4495338 A
- EP 1012195 A
- EP 728769 A